# EUROPEAN PATENT APPLICATION

(11) **EP 4 686 210 A1**
(43) Date of publication of application: **28.01.2026**
(21) Application number: 24774117.6
(22) Date of filing: 19.03.2024
(51) Int. Cl.: H04N 21/442

(54) **MEDIA CONTENT PLAYBACK METHOD AND APPARATUS, AND TERMINAL DEVICE**

(30) Priority: 20.03.2023 CN 202310275045
(71) Applicant: Beijing Zitiao Network Technology Co., Ltd., Beijing 100190 (CN)
(72) Inventor: JIANG, Yong, Beijing 100028 (CN); YAO, Keqi, Beijing 100028 (CN)
(74) Representative: Isarpatent
(86) International application number: PCT/CN2024/082488
(87) International publication number: WO 2024/193552

(57) **Abstract**

The embodiments of the present disclosure relate to a method and an apparatus for playing back media content and a terminal device, and the method comprises: in response to an operation instruction for switching from a first playback mode to a second playback mode triggered for currently played media content, acquiring playback status information corresponding to the media content; generating a second playback image corresponding to the second playback mode according to capacity information and specification information; determining a playback progress of the media content according to media content information and a stored player instance; and playing back the media content continually in accordance with the playback progress on the second playback image.

## Description

### CROSS REFERENCE TO RELATED APPLICATION

The present application is based on and claims a priority of the Chinese patent application with an application number 202310275045.9, filed on March 20, 2023, the disclosure of which is incorporated herein in its entirety.

### TECHNICAL FIELD

Embodiments of the present disclosure relate to the field of computer technology, and in particular, to a method and an apparatus for playing back media content and a terminal device.

### BACKGROUND

A media content playback mode may include different viewing modes. A user may switch between different playback modes as needed.

### SUMMARY

The present disclosure provides a method and an apparatus for playing back media content and a terminal device.

In a first aspect, the present disclosure provides a method for playing back media content, comprising:
in response to an operation instruction for switching from a first playback mode to a second playback mode triggered for currently played media content, acquiring playback status information corresponding to the media content, wherein the playback status information includes capacity information of a first playback image corresponding to the first playback mode, specification information of a container carrying the first playback image, a shared stored player instance, and media content information corresponding to the media content;
generating a second playback image corresponding to the second playback mode according to the capacity information and the specification information;
determining a playback progress of the media content according to the media content information and the stored player instance;
playing back the media content continually in accordance with the playback progress on the second playback image.

In a second aspect, the present disclosure provides an apparatus for playing back media content, comprising:
a processing module configured to acquire, in response to an operation instruction for switching from a first playback mode to a second playback mode triggered for currently played media content, playback status information corresponding to the media content, wherein the playback status information includes capacity information of a first playback image corresponding to the first playback mode, specification information of a container carrying the first playback image, a shared stored player instance, and media content information corresponding to the media content;
a generating module configured to generate a second playback image corresponding to the second playback mode according to the capacity information and the specification information;
a determining module configured to determine a playback progress of the media content according to the media content information and the stored player instance;
a displaying module configured to play back the media content continually in accordance with the playback progress on the second playback image.
In a third aspect, there is provided a terminal device, comprising:
a memory configured to store a computer program;
a processor configured to implement the method for playing back media content according to any of the embodiments in the first aspect when executing the program stored in the memory;
a display configured to play back the media content continually in accordance with the playback progress on the second playback image.

In a fourth aspect, there is provided a computer-readable storage medium having a computer program stored thereon, which, when executed by a terminal device, implements the method for playing back media content according to any of the embodiments in the first aspect.

### BRIEF DESCRIPTION OF THE DRAWINGS

FIG. 1 is a schematic diagram of a playback image corresponding to a non-focus mode provided by the present disclosure;
FIG. 2 is a schematic diagram of a playback image corresponding to a focus mode provided by the present disclosure;
FIG. 3 is a schematic flow chart of a method for playing back media content provided by an embodiment of the present disclosure;
FIG. 4 is a schematic structural diagram of an apparatus for playing back media content provided by an embodiment of the present disclosure; and
FIG. 5 is a schematic structural diagram of a terminal device provided by an embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are some of the embodiments of the present disclosure, not all of the embodiments. Based on the embodiments in the present disclosure, all other embodiments obtained by ordinary skills in the art without creative efforts are within the scope claimed by the present disclosure.

It is understood that, before using the technical solutions disclosed in the respective embodiments of the present disclosure, types, usage scopes, usage scenarios, etc. of personal information involved in the present disclosure should be informed to users and authorization from the users should be obtained in an appropriate manner in accordance with relevant laws and regulations.

For example, in response to receiving an active request from a user, a prompt message is sent to the user to clearly prompt the user that the operation requested by the user to be performed will require acquiring and using personal information of the user. Thus, the user may autonomously choose whether to provide personal information to software or hardware such as a terminal device, an application, a server, or a storage medium that performs operations of the technical solutions of the present disclosure according to the prompt message.

As an optional but non-limiting implementation, in response to receiving an active request from a user, the way to send prompt information to the user may be, for example, in the form of a pop-up window, in which the prompt information may be presented in text form. In addition, the pop-up window may also carry a selection control for the user to choose "agree" or "disagree" to provide personal information to the terminal device.

It is understood that the above process for notification and acquisition of authorization from the user are merely illustrative and do not constitute a limitation on the implementation of the present disclosure. Other means that meet relevant laws and regulations may also be applied to the implementation of the present disclosure.

It is understood that the data involved in the present technical solutions (including but not limited to the data itself, the acquisition or use of the data) shall comply with requirements of pertinent laws, regulations and relevant provisions.

To facilitate understanding of the embodiments of the present disclosure, further explanations will be made below using specific embodiments in conjunction with the accompanying drawings, and these embodiments do not constitute a limitation on the embodiments of the present disclosure.

Before introducing the embodiments of the present disclosure, the following will be introduced first.

The media content playback mode may include different viewing modes. For example, in one viewing mode, all interaction elements are included on a page, such as a search control, a search box, a like control, a comment control, etc. Compared with the above viewing mode, there may be another viewing mode, for example, switching the image to an unobstructed status, and only a few interaction buttons displayed in a non-media content image area in the page, that is, hiding the elements that obstruct the image as much as possible, so that the user is in an immersive content consumption mode.

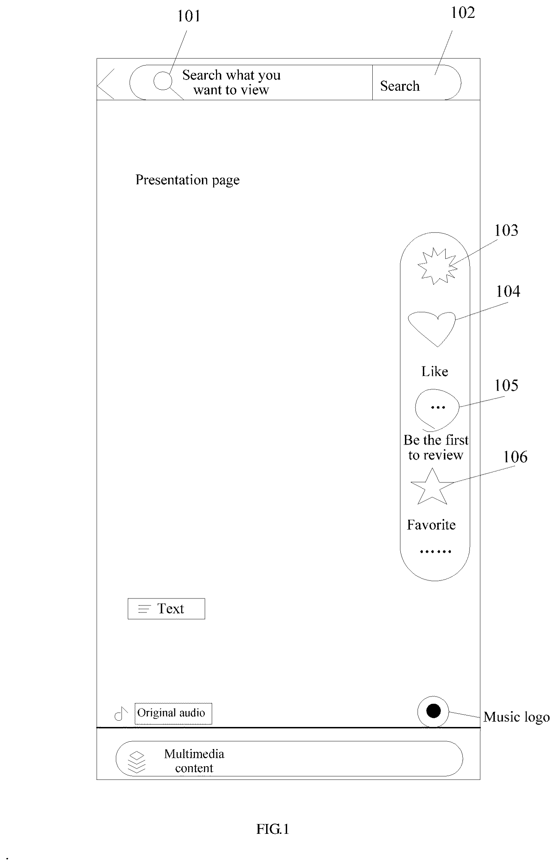

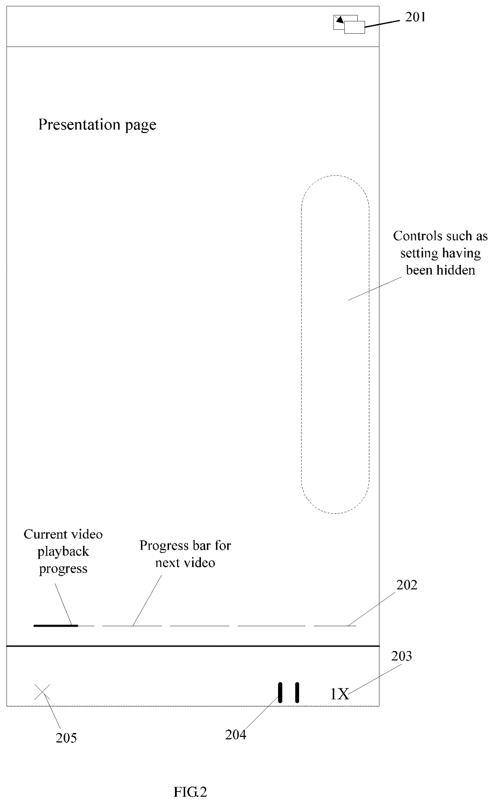

In the different viewing (playback) modes as introduced in the foregoing, one of the playback modes, which is referred to as a first playback mode for example, as shown in FIG. 1, includes many controls in the page shown in FIG. 1, for example a search control 101, a search box 102, a setting control 103, a like control 104, a comment control 105, and an add to favorite control 106, etc. Another playback mode, which is referred to as a second playback mode for example, as shown in FIG. 2 for example, may include an icon control 201 for "small window mode", a progress bar identification 202, a speed control 203, a pause control 204, and an exit control 205. In the second playback mode, the controls shown in FIG. 1 are basically hidden, allowing the user to immerse in a focus watching mode. Of course, in FIG. 2, there may also include a fast forward, a fast rewind, etc. (not shown in FIG. 2) to improve the user's experience of watching media content in the second playback mode. It can also be seen from FIG. 1 and FIG. 2 that there are certain differences in the controls and page layouts in the first playback mode and the second playback mode. In the related arts, the switching of the second playback mode by displaying and hiding the page elements may also achieve coherent playback of images and simple differentiated interaction. However, for the demand of realizing that the page may switch videos by horizontal sliding in the second playback mode, or using independent vertical sliding to switch data streams, they cannot provide a simple and effective support solution, and if the controls are changed in the same page according to different media content viewing modes, it is bound to have a great impact on the media content viewing modes. Like for example, if a user switches from the first playback mode to the second playback mode, not only some controls in the first playback mode must be hidden, but also some controls in the second playback mode must be displayed. Once the technology continues to iterate and update, changes made will not only be those above, but the changes may be even greater.

As far as current technology is concerned, the second playback mode and the first playback mode are technically coupled. However, as technology continues to iterate and update, the difference between the second playback mode and the first playback mode will become greater and greater. When differentiated adjustments (compared to the first playback mode) are performed on controls in the second playback mode, it is bound to have a great impact on the first playback mode.

In order to prevent unnecessary impact on technical iterations and updates subsequently, a new technical solution is thus needed. It is possible to decouple the second playback mode and the first playback mode technically and use different independent pages for the two modes for viewing media content. Even if subsequently the second playback mode is further adjusted technically, it will not affect the structure and data, etc., of the first playback mode. Moreover, the subsequent iteration cost for the second playback mode will also be even lower.

To this end, the present disclosure provides the following method embodiments. To facilitate understanding of the embodiments of the present disclosure, further explanations will be made below using specific embodiments in conjunction with the accompanying drawings, and these embodiments do not constitute a limitation on the embodiments of the present disclosure.

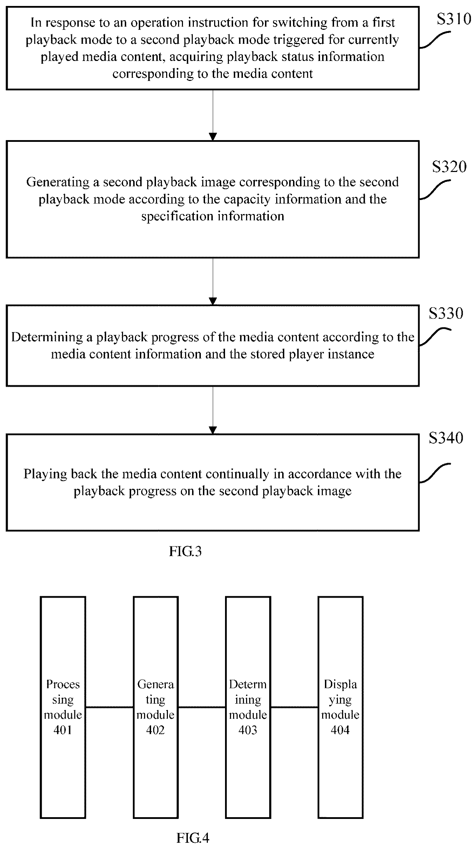

FIG. 3 is a schematic flow chart of a method for playing back media content provided by an embodiment of the present disclosure. The method comprises the following operations.

In operation S310, in response to an operation instruction for switching from a first playback mode to a second playback mode triggered for currently played media content, playback status information corresponding to the media content is acquired.

Specifically, in some embodiments, the operation instruction may include an operation for performing zooming in/out an image of the media content on the first playback image. Wherein the media content includes but is not limited to content such as a video source, a picture, and the like.

For example, when a user performs an operation for zooming in the image of the currently played media content on the first playback image, a terminal device determines, in response to the operation instruction, that the user desires to switch the currently played media content from a first playback mode to a second playback mode. Then, firstly the playback status information corresponding to the media content is acquired. Wherein the playback status information may include, for example, capacity information of a first playback image corresponding to the first playback mode, specification information of a container carrying the first playback image, a shared stored player instance, and media content information corresponding to the media content.

In some embodiments, the capacity information may include, for example, the width, height, and position information in the screen of the TextureView corresponding to the first playback image, for example the coordinate data on the x-axis and y-axis respectively, wherein the coordinate origin is a preset position in the screen. The specification information is for example the width and height of the container view, and the position information of the container in the screen. Similarly, the position information may also include the coordinate data on the x-axis and y-axis. The reason for acquiring the two types of information is to facilitate that the second playback image may be ensured to be aligned with the first playback image when constructing a second playback image corresponding to the second playback mode subsequently. The shared stored player instance is used to acquire a playback progress of the current media content, and to ensure that, when the media content is played back on the second playback image, it may be synchronized with the media content played back on the first playback image. The media content information then may include source data information of the media content currently being played back, such as name of the media content, name of the author, background music in the media content, the media content, and other information.

After acquiring the information, it is stored in the Intent parameter (Android uses the special class Intent to implement switching between Activities). Through Intent, the information is passed into the Activity corresponding to the second playback page (Activity is one of the four major components in the Android system. In Android mobile application development, it represents the screen presented by a mobile phone, which refers to a complete page that occupies a screen).

In operation S320, a second playback image corresponding to the second playback mode is generated according to the capacity information and the specification information.

Specifically, as introduced above, the purpose of acquiring the capacity information and the specification information is to create a second playback image aligned with the first playback image. That is, the specification and so on of the created second playback image are all created according to the scale of the first playback image. This ensures that even after switching to the second playback mode, the media content effect viewed by the user will not have too large error, thereby ensuring viewing experience of the user.

Specifically, it is necessary to determine the equivalent capacity information corresponding to the second playback mode according to the capacity information corresponding to the first playback mode, and create a structure view (TextureView) corresponding to the second playback mode based on the equivalent capacity information, and determine the equivalent specification information corresponding to the second playback mode according to the specification information corresponding to the first playback mode, and create a container corresponding to the second playback mode based on the equivalent specification information. Finally, the second playback image is created according to the TextureView corresponding to the second playback mode and the container corresponding to the second playback mode.

In operation S330, a playback progress of the media content is determined according to the media content information and the stored player instance.

Specifically, as introduced above, the media content information is source data information of the media content being played back when the operation instruction is triggered. The media content may be found according to the source data information, and then the playback progress of the media content when the operation instruction is triggered may be determined according to the stored player instance. According to the two parameters, the playback progress of the played media content when the operation instruction is triggered may be determined.

In operation S340, the media content is played back continually in accordance with the playback progress on the second playback image.

Specifically, after determining the media content that needs to be played back on the second playback image and determining the playback progress, the media content may be played back continually in accordance with the playback progress directly. When the media content is played back on the second playback image in accordance with the playback progress, it is already in the second playback mode. That is, it has been switched from the first playback mode to the second playback mode. Considering that the first playback mode and the second playback mode use two different playback images, that is, utilizing different page technologies to create the playback images, an occurrence of a case in which the two playback modes are technically coupled is avoided. Even if the technology for the first playback mode/the second playback mode is iterated and updated later, since the technologies used by the two are not coupled, it will not affect the other technology that needs to be iterated and updated.

Furthermore, since different pages are used, there is no need for operation logics such as hiding controls for a certain playback mode first and then displaying controls for other modes due to a switching of the playback mode. The running of the operation logics will be greatly reduced, which will also reduce unnecessary troubles for developers.

The method for playing back media content provided by the embodiment of the present disclosure acquires, in response to an operation instruction for switching from a first playback mode to a second playback mode triggered for currently played media content, playback status information corresponding to the media content. The playback status information includes capacity information of a first playback image corresponding to the first playback mode, specification information of a container carrying the first playback image, a shared stored player instance, and media content information. A second playback image corresponding to the second playback mode is generated according to the capacity information and the specification information. That is, the first playback image and the second playback image are the same, so that even if there exists a switching between modes, the image seen by the user will not change, thereby avoiding affecting the viewing experience of the user. Then, a playback progress of the media content is determined according to the media content information and the stored player instance. Moreover, the media content is played back continually in accordance with the current playback progress on the second playback image. In the whole process, the first playback mode and the second playback mode use different independent playback images, and there is no coupling relationship. Therefore, while ensuring the seamless switching between the two playback modes, the influence of different data flow manners during the technical iteration process is reduced.

Optionally, the playback status information further includes media content frame information of a media content frame being played back when the operation instruction is triggered. Wherein the media content frame refers to a frame of image of the media content. For example, if the media content is a video, the media content frame refers to a video frame. The media content frame information then refers to video frame information. The video frame information, for example, may include but is not limited to image information corresponding to the video frame, that is, the content displayed in the frame image.

Considering that when the media content switches from the first playback image to the second playback image, it takes a certain amount of time to create the second playback image. During this process, considering that the screen will be displayed in black, which will cause a less friendly experience to the user. Therefore, the present disclosure may also comprise method operations as follows:
displaying the media content frame as the first frame image based on the media content frame information.

Specifically, when the user triggers the operation instruction for switching from the first playback mode to the second playback mode, the system simultaneously records the media content frame presently being played back, and then retains the media content frame. Before the creation of the second playback image is completed, the media content frame is drawn as the first frame image and presented in the Activity corresponding to the second playback mode. After the creation of the second playback image is completed and the playback progress of the media content is determined, the media content continues to be presented in the second playback image.

Further optionally, considering that when switching the playback mode, there may be "transition animation effects", such as sliding in from the side, sliding in from the bottom, or gradually appearing, etc. However, in the present disclosure, it is considered that the playback mode switching is completed without the user's perception, which will provide a better user experience. Therefore, when the media content frame is displayed as the first frame image based on the media content frame information, it includes presenting the first frame image based on the media content frame information without any pre-configured playback effect.

Specifically, the execution of a playback action instruction corresponding to the pre-configured playback mode is prohibited. The execution of the playback action instruction, such as sliding in from the side, sliding in from the bottom, or gradually appearing, etc., which are mentioned above, being prohibited may avoid animation effects corresponding to the above playback action instruction when the media content frame is introduced for being displayed.

Since once the user finds that the media content frame appears in a form of a certain kind of animation effect, it will be found immediately that the media content has been switched to another playback mode. While, if there is no animation effect and the current media content frame is simply displayed, the user will visually believe that "the media content is being played back continually". The creation of the second playback image and further other preparations for the second playback mode take a very short time, so if only the media content frame is used as the first frame image, and then the second playback mode is naturally switched to for playing back the media content continually, from a visual perspective, the user has no perception, which may also ensure that the user's viewing experience is not affected.

In a specific implementation, there may be certain differences in the playback image between the first playback mode and the second playback mode. For example, the first playback mode and the second playback mode are configured with different interaction methods and/or configured with different interaction controls.

Therefore, in order to improve the user's viewing experience, the method further comprises before playing back the media content continually in accordance with the playback progress on the second playback image, configuring the interaction control corresponding to the second playback mode, and displaying the interaction control at a preset position on the second playback image.

In some embodiments, the interaction control includes one or more of the following: a control for accelerating the playback progress, a control for slowing down the playback progress, a speed control, and a control for playing back media content in a reduced window of a preset size.

Further optionally, when the media content is media content in a media content set, the interaction control further includes an identification control for indicating a playback progress, and the identification control is used to indicate the playback progress of each media content in the media content set.

As mentioned above, FIG. 1 shows a schematic structural diagram of a playback image in the first playback mode. FIG. 2 shows a schematic structural diagram of a playback image in the second playback mode. In order to facilitate the user to enter the "immersive content consumption mode", the interaction controls, for example, the comment, like, media content information introduction, etc. included in FIG. 1 will be hidden as much as possible in the playback image for the second playback mode. In FIG. 2, a control for playing back media content in a reduced window of a preset size may be displayed, to facilitate the user to view media content through a small window. The playback progress of media content may also be presented. In particular, when the media content is media content in a media content set, the interaction control may further include an identification control for indicating playback progress, and the identification control is used to indicate the playback progress of each media content in the media content set, as specifically shown in FIG. 2.

As introduced above, the first playback mode and the second playback mode have other differences, such as in the interaction method, in addition to the difference in the interaction controls displayed on the playback image.

In some embodiments, for example, when the media content is media content in a media content set, the method further comprises:
in response to a trigger instruction for sliding along a first preset direction performed on the second playback image, playing back other media content in the media content set except the currently played media content.

Specifically, the first preset direction is, for example, sliding left/right. Then, when the media content is currently in the second playback mode, other media content in the media content set except the currently played media content may be played back in response to the trigger instruction for sliding left or right by the user. For example, sliding left once means playing back other media content on the left side of the currently played media content, or sliding right once means playing back other media content on the right side of the currently played media content.

In an optional implementation, the method may further comprise:
in response to a trigger instruction for sliding along a second preset direction performed on the second playback image, playing back media content having an association relationship with the currently played media content.

That is, when the media content is currently in the second playback mode, in response to the trigger instruction for sliding along the second preset direction performed on the second playback image, the media content having an association relationship with currently played media content is played back.

The media content having an association relationship mentioned here may include media content having an association relationship with current media content, for example, media content belonging to the same subject, or media content belonging to the same type, or media content belonging to the same author, etc. Of course, the media content having an association relationship may also include media content belonging to the same media content set as this media content.

In an optional implementation, what is described in the foregoing is entering the second playback mode, and the operations performed or the contents displayed in the second playback mode, etc. The following further illustrates how to exit the second operation mode, which may specifically refer to the following method operation:
in response to an action performed on the second playback image opposite to the operation instruction, exiting the second playback mode.

Specifically, in a possible implementation, as introduced above, the operation instruction includes an operation for performing zooming in/out an image of the media content on the first playback image.

Assume that if the operation for performing zooming in the image of the media content on the first playback image is switching to the second operation mode, then the operation for zooming out the image of the media content is exiting the second operation mode.

For another example, if the operation for performing zooming out the image of the media content on the first playback image is switching to the second operation mode, then the operation for zooming in the image of the media content is exiting the second operation mode.

Furthermore, in addition to exiting the second operation mode in the above ways, if the currently played media content is not a media content set but a single media content, the operation for exiting the second playback mode may further comprise:
in response to a trigger instruction for sliding in any direction performed on the second playback image, exiting the second playback mode.

The above are embodiments of the method for playing back media content provided by the present disclosure. The following will introduce other embodiments related to playback of media content provided by the present disclosure. Refer to the following for details.

FIG. 4 is a schematic structural diagram of an apparatus for playing back media content provided by an embodiment of the present disclosure. The apparatus comprises: a processing module 401, a generating module 402, a determining module 403, and a displaying module 404.

The processing module 401 is configured to acquire, in response to an operation instruction for switching from a first playback mode to a second playback mode triggered for currently played media content, playback status information corresponding to the media content, wherein the playback status information includes capacity information of a first playback image corresponding to the first playback mode, specification information of a container carrying the first playback image, a shared stored player instance, and media content information corresponding to the media content.

The generating module 402 is configured to generate a second playback image corresponding to the second playback mode according to the capacity information and the specification information.

The determining module 403 is configured to determine a playback progress of the media content according to the media content information and the stored player instance.

The displaying module 404 is configured to play back the media content continually in accordance with the playback progress on the second playback image.

Optionally, the generating module 402 is specifically configured to determine a structure view corresponding to the second playback mode according to the capacity information corresponding to the first playback mode;
create a container corresponding to the second playback mode according to the specification information corresponding to the first playback mode; and
create the second playback image based on the structural view corresponding to the second playback mode and the container corresponding to the second playback mode.

Optionally, the playback status information further includes media content frame information of a media content frame being played back when the operation instruction is triggered.

The displaying module 404 is further configured to display the media content frame as the first frame image based on the media content frame information.

Optionally, the processing module 401 is further configured to present the first frame image based on the media content frame information without any pre-configured playback effect.

Optionally, the first playback mode and the second playback mode are configured with different interaction methods and/or configured with different interaction controls.

Optionally, the processing module 401 is further configured to configure the interaction control corresponding to the second playback mode.

The displaying module 404 is further configured to display the interaction control at a preset position on the second playback image.

Optionally, the interaction control includes one or more of the following: a control for accelerating the playback progress, a control for slowing down the playback progress, a speed control, and a control for playing back media content in a reduced window of a preset size.

Optionally, when the media content is media content in a media content set, the interaction control further includes an identification control for indicating a playback progress, and the identification control is used to indicate the playback progress of each media content in the media content set.

Optionally, when the media content is media content in a media content set, the processing module 401 is further configured to respond to a trigger instruction for sliding along a first preset direction performed on the second playback image.

The displaying module 404 is further configured to play back other media content in the media content set except the currently played media content.

Optionally, the processing module 401 is further configured to respond to a trigger instruction for sliding along a second preset direction performed on the second playback image.

The displaying module 404 is further configured to play back media content having an association relationship with the currently played media content.

Optionally, the operation instruction includes an operation for performing zooming in/out an image of the media content on the first playback image.

Optionally, the processing module 401 is further configured to exit the second playback mode in response to an action performed on the second playback image opposite to the operation instruction.

Optionally, when the media content is not media content in a media content set, the processing module 401 is further configured to exit the second playback mode in response to a trigger instruction for sliding in any direction performed on the second playback image.

The functions performed by various components in the apparatus for playing back media content provided in the embodiments of the present disclosure have been described in detail in the above embodiments, and thus will not be repeated here again.

The apparatus for playing back media content provided by the embodiment of the present disclosure acquires, in response to an operation instruction for switching from a first playback mode to a second playback mode triggered for currently played media content, playback status information corresponding to the media content. The playback status information includes capacity information of a first playback image corresponding to the first playback mode, specification information of a container carrying the first playback image, a shared stored player instance, and media content information. A second playback image corresponding to the second playback mode is generated according to the capacity information and the specification information. That is, the first playback image and the second playback image are the same, so that even if there exists a switching between modes, the image seen by the user will not change, thereby avoiding affecting the viewing experience of the user. Then, a playback progress of the media content is determined according to the media content information and the stored player instance. Moreover, the media content is played back continually in accordance with the current playback progress on the second playback image. In the whole process, the first playback mode and the second playback mode use different independent playback images, and there is no coupling relationship. Therefore, while ensuring the seamless switching between the two playback modes, the influence of different data flow manners during the technical iteration process is reduced.

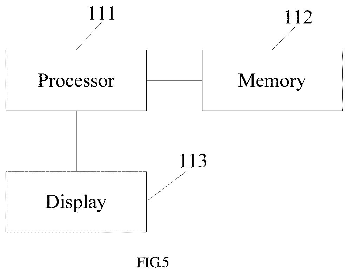

As shown in FIG. 5, an embodiment of the present disclosure provides a terminal device including a processor 111, a memory 112, and a display 113.

The memory 112 is configured to store a computer program.

In an embodiment of the present disclosure, the processor 111 is configured to, when executing the program stored in the memory 112, implement the method for playing back media content provided by any of the above method embodiments. The method comprises:
in response to an operation instruction for switching from a first playback mode to a second playback mode triggered for currently played media content, acquiring playback status information corresponding to the media content, wherein the playback status information includes capacity information of a first playback image corresponding to the first playback mode, specification information of a container carrying the first playback image, a shared stored player instance, and media content information corresponding to the media content;
generating a second playback image corresponding to the second playback mode according to the capacity information and the specification information; and
determining a playback progress of the media content according to the media content information and the stored player instance.

Optionally, generating the second playback image corresponding to the second playback mode according to the capacity information and the specification information comprises:
determining a structure view corresponding to the second playback mode according to the capacity information corresponding to the first playback mode;
creating a container corresponding to the second playback mode according to the specification information corresponding to the first playback mode; and
creating the second playback image based on the structural view corresponding to the second playback mode and the container corresponding to the second playback mode.

Optionally, the playback status information further includes media content frame information of a media content frame being played back when the operation instruction is triggered; before generating the second playback image corresponding to the second playback mode according to the capacity information and the specification information, the method further comprises:
displaying the media content frame as the first frame image based on the media content frame information.

Optionally, displaying the media content frame as the first frame image based on the media content frame information comprises:
presenting the first frame image based on the media content frame information without any pre-configured playback effect.

Optionally, the first playback mode and the second playback mode are configured with different interaction methods and/or configured with different interaction controls.

Optionally, before playing back the media content continually in accordance with the playback progress on the second playback image, the method further comprises:
configuring the interaction control corresponding to the second playback mode, and displaying the interaction control at a preset position on the second playback image.

Optionally, the interaction control includes one or more of the following: a control for accelerating the playback progress, a control for slowing down the playback progress, a speed control, and a control for playing back media content in a reduced window of a preset size.

Optionally, when the media content is media content in a media content set, the interaction control further includes an identification control for indicating a playback progress, and the identification control is used to indicate the playback progress of each media content in the media content set.

Optionally, when the media content is media content in a media content set, the method further comprises:
in response to a trigger instruction for sliding along a first preset direction performed on the second playback image, playing back other media content in the media content set except the currently played media content.

Optionally, the method further comprises:
in response to a trigger instruction for sliding along a second preset direction performed on the second playback image, playing back media content having an association relationship with the currently played media content.

Optionally, the operation instruction comprises an operation for performing zooming in/out an image of the media content on the first playback image.

Optionally, the method further comprises:
in response to an action performed on the second playback image opposite to the operation instruction, exiting the second playback mode.

Optionally, when the media content is not media content in a media content set, in response to a trigger instruction for sliding in any direction performed on the second playback image, exiting the second playback mode.

The display 113 is configured to display all the content that needs to be displayed as introduced above on the second playback image, for example, including to play back the media content continually in accordance with the playback progress on the second playback image; or display the media content frame as the first frame image; or display the interaction control; or display other media content in the media content set, or media content having an association relationship with the currently played media content, etc.

An embodiment of the present disclosure further provides a computer-readable storage medium having a computer program stored thereon, which, when executed by a terminal device, implements the method for playing back media content provided by the above method embodiment.

It should be noted that, here, relational terms such as "first" and "second" are only used to distinguish one entity or operation from another entity or operation, and do not necessarily require or imply any such actual relationship or order existing between these entities or operations. Moreover, the terms "comprise", "include" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, elements defined by the sentence "comprise a/an ..." do not exclude the existence of other elements in the process, method, article or device including the elements.

The above are only specific embodiments of the present disclosure, enabling those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments illustrated herein, but will conform to the widest scope consistent with the principles and novel features applied herein.

## Claims

1. A method for playing back media content, comprising:
in response to an operation instruction for switching from a first playback mode to a second playback mode triggered for currently played media content, acquiring playback status information corresponding to the media content, wherein the playback status information includes capacity information of a first playback image corresponding to the first playback mode, specification information of a container carrying the first playback image, a shared stored player instance, and media content information corresponding to the media content;
generating a second playback image corresponding to the second playback mode according to the capacity information and the specification information;
determining a playback progress of the media content according to the media content information and the stored player instance; and
playing back the media content continually in accordance with the playback progress on the second playback image.

2. The method according to claim 1, wherein generating the second playback image corresponding to the second playback mode according to the capacity information and the specification information comprises:
determining a structure view corresponding to the second playback mode according to the capacity information corresponding to the first playback mode;
creating a container corresponding to the second playback mode according to the specification information corresponding to the first playback mode; and
creating the second playback image based on the structural view corresponding to the second playback mode and the container corresponding to the second playback mode.

3. The method according to claim b1**,** wherein the playback status information further includes media content frame information of a media content frame being played back when the operation instruction is triggered; before generating the second playback image corresponding to the second playback mode according to the capacity information and the specification information, the method further comprises:
displaying the media content frame as the first frame image based on the media content frame information.

4. The method according to claim 3, wherein displaying the media content frame as the first frame image based on the media content frame information comprises:
presenting the first frame image based on the media content frame information without any pre-configured playback effect.

5. The method according to any of claims 1 to 4, wherein the first playback mode and the second playback mode are configured with different interaction methods and/or configured with different interaction controls.

6. The method according to claim 5, wherein, before playing back the media content continually in accordance with the playback progress on the second playback image, the method further comprises:
configuring the interaction control corresponding to the second playback mode, and displaying the interaction control at a preset position on the second playback image.

7. The method according to claim 5, wherein, when the media content is media content in a media content set, the method further comprises:
in response to a trigger instruction for sliding along a first preset direction performed on the second playback image, playing back other media content in the media content set except the currently played media content.

8. The method according to claim 5, the method further comprises:
in response to a trigger instruction for sliding along a second preset direction performed on the second playback image, playing back media content having an association relationship with the currently played media content.

9. The method according to claim 5, wherein the operation instruction comprises: an operation for performing zooming in/out an image of the media content on the first playback image.

10. The method according to claim 9, the method further comprises:
in response to an action performed on the second playback image opposite to the operation instruction, exiting the second playback mode.

11. The method according to claim 9, wherein, when the media content is not media content in a media content set, the method further comprises:
in response to a trigger instruction for sliding in any direction performed on the second playback image, exiting the second playback mode.

12. An apparatus for playing back media content, comprising:
a processing module configured to acquire, in response to an operation instruction for switching from a first playback mode to a second playback mode triggered for currently played media content, playback status information corresponding to the media content, wherein the playback status information includes capacity information of a first playback image corresponding to the first playback mode, specification information of a container carrying the first playback image, a shared stored player instance, and media content information corresponding to the media content;
a generating module configured to generate a second playback image corresponding to the second playback mode according to the capacity information and the specification information;
a determining module configured to determine a playback progress of the media content according to the media content information and the stored player instance;
a displaying module configured to play back the media content continually in accordance with the playback progress on the second playback image.

13. A terminal device, comprising:
a memory configured to store a computer program;
a processor configured to implement the method for playing back media content according to any of claims 1 to 11 when executing the program stored in the memory;
a display configured to play back the media content continually in accordance with the playback progress on the second playback image.

14. A computer-readable storage medium having a computer program stored thereon, which, when executed by a terminal device, implements the method for playing back media content according to any of claims 1 to 11.

15. A computer program comprising instructions, which, when executed by a processor, implement the method for playing back media content according to any of claims 1 to 11.

16. A computer program product comprising instructions, which, when executed by a processor, implement the method for playing back media content according to any of claims 1 to 11.
